# EUROPEAN PATENT SPECIFICATION

(11) **EP 2 237 545 B1**
(45) Date of publication and mention of the grant of the patent: **20.06.2012**
(21) Application number: 09806336.5
(22) Date of filing: 24.07.2009
(51) Int. Cl.: H04W 4/24, H04L 12/14, H04M 15/00

(54) **METHOD AND DEVICE FOR USER INFORMATION CUTOVER**
VERFAHREN UND GERÄT ZUR ÜBERTRAGUNG VON BENUTZERDATEN
PROCÉDÉ ET DISPOSITIF PERMETTANT UN TRANSFERT D'INFORMATIONS UTILISATEUR

(30) Priority: 14.08.2008 CN 200810146269
(43) Date of publication of application: 06.10.2010
(60) Divisional application: 12158547.5
(73) Proprietor: Huawei Technologies Co., Ltd., Longgang District, Shenzhen Guangdong 518129 (CN)
(72) Inventor: RONG, Chuanxiang, Shenzhen 518129 (CN)
(74) Representative: Körber, Martin Hans
(86) International application number: PCT/CN2009/072903
(87) International publication number: WO 2010/017733

(56) References cited:
- EP-A1- 1 802 027
- EP-A1- 1 924 024
- CN-A- 1 889 619
- CN-A- 1 917 544
- CN-A- 101 132 289

## Description

### FIELD OF THE INVENTION

The present invention relates to communications technologies, and in particular, to a user information cutover technology.

### BACKGROUND

With the increase of the telecom users' demand for multimedia services and the upgrade of wireless networks, the data services provided by telecom operators attract more and more attention.

However, the services provided by the telecom operator are more diversified, the charging mode is more sophisticated, and many problems are exposed. For example, in a traditional network, the charging function has been developed for different types of service systems such as voice, data, and multimedia contents concurrently. As a result, the charging for one service is independent of the charging for another service, online charging and offline charging are based on different mechanisms, and the user-segmentation marketing policy is baffled by the natural partition between PrePaid Service (PPS) user charging (namely, online charging) and Post Usage Billing (PUB) (namely, offline charging). With the emergence of new services, the operators have to invest repeatedly to construct charging systems compliant with complete charging requirements. Consequently, the charging cost is high, and the charging efficiency is low. Because each charging system has different charging capabilities, it is impossible to share information or perform bundled service marketing between different systems, and it is impossible to fulfill requirements of charging in the 3^{rd} generation (3G) application environment in the future.

In order to transfer the users from the traditional Intelligent Network (IN) to the Online Charging System (OCS), those skilled in the art put forward a user information cutover method, namely, import masses of user information from the IN to the OCS in batches. However, in the cutover process, neither the IN nor the OCS can provide charging services for the users corresponding to such user information, and the system has to request suspension of the user service. The suspension duration depends on the time spent in the cutover. Batch cutover of user information tends to take a long time, and leads to a long time of suspending the user service. Obviously, this interrupts the user in using the service, and brings loss to the operator.

EP 1802027 A1 discloses a method apparatus for invoking online charging of a service requested via a communications network and to be accessed according to a first protocol, wherein subscriber information is received from a first network element including information for invoking the online charging, and the received subscriber information is interpreted and in response to a service request online charging is invoked from a second network element for the service by means of a second protocol.

### SUMMARY

The embodiments of the present invention provide methods and apparatuses for cutting over user information to minimize time of suspending the service for the user.

According to a first aspect of the present invention a user information cutover method includes:
obtaining, by a Customer Relationship Management, CRM, information about a user from an IN, submitting the user information to an OCS, or triggering, by the CRM, the OCS to obtain the user information from the IN; and
requesting, by the CRM, a Core Network (CN) to modify the user's Customized Application for Mobile Network Enhanced Logic (CAMEL) subscription information into the CAMEL subscription information corresponding to the OCS, and requesting the CN to modify the user's attribution information into the attribution information corresponding to the OCS.

According to a second aspect of the present invention a user information cutover apparatus includes in its first implementation form:
a user information obtaining unit, configured to obtain information about a user from an IN;
a user information providing unit, configured to submit the user information obtained by the user information obtaining unit to an OCS; and
a requesting unit, configured to: after the user information providing unit submits the user information obtained by the user information obtaining unit to the OCS, request a CN to modify the user's CAMEL subscription information into the CAMEL subscription information corresponding to the OCS, and request the CN to modify the user's attribution information into the attribution information corresponding to the OCS.

In its second implementation form the user information cutover apparatus includes:
a triggering unit, configured to trigger the OCS to obtain information about a user; and
a requesting unit, configured to: after the triggering unit triggers the OCS to obtain the user information, request a CN to modify the user's CAMEL subscription information into the CAMEL subscription information corresponding to the OCS, and request the CN to modify the user's attribution information into the attribution information corresponding to the OCS.

According to a third aspect of the present invention a user information cutover method includes:
obtaining, by an Online Charging System, OCS, information about a user from an IN; and
converting, by the OCS, the user information into an OCS format.

In its third implementation form the user information cutover apparatus includes:
an information obtaining unit, configured to obtain information about a user from an IN; and
a user information format converting unit, configured to convert the user information obtained by the information obtaining unit into an OCS format.

In the embodiments of the present invention, the user information submitted to an OCS or the user information obtained by the OCS is the user information of one user. That is, the user information of one user is used as a unit for cutover. Because the load of cutting over user information of one user is smaller than the load of cutting over user information in batches, the cutover of user information of one user is faster than batch cutover of user information, and the time of suspending the user service is shorter.

### BRIEF DESCRIPTION OF THE DRAWINGS

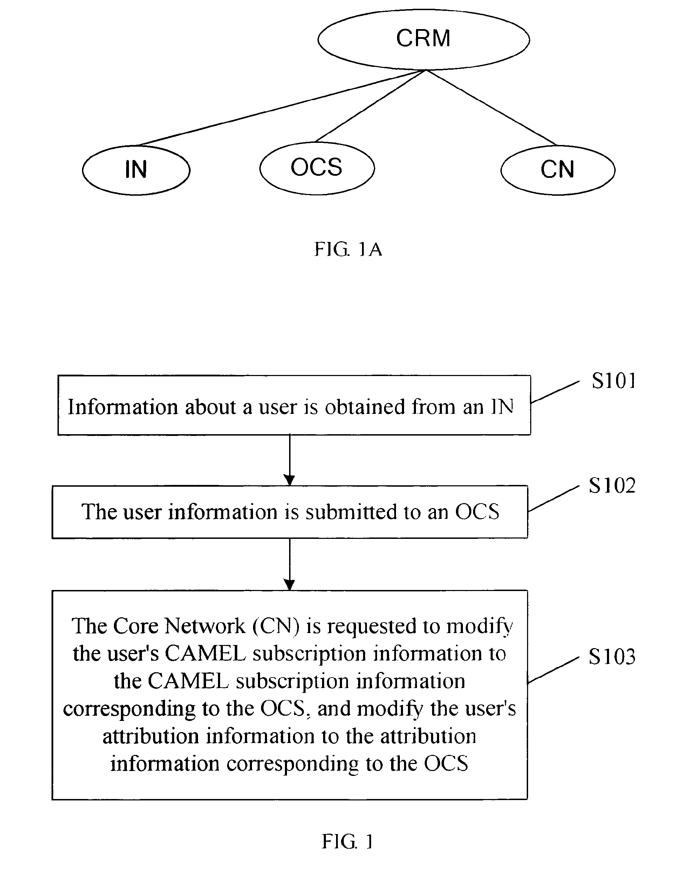

FIG. 1A shows an architecture of a user information cutover system in an embodiment of the present invention;
FIG. 1 is a flowchart of a user information cutover method in an embodiment of the present invention;
FIG. 2 shows a structure of a user information cutover apparatus in an embodiment of the present invention;
FIG. 3 is a flowchart of a user information cutover method in an embodiment of the present invention;
FIG. 4 shows a structure of a user information cutover apparatus in an embodiment of the present invention;
FIG. 5 is a flowchart of a user information cutover method in an embodiment of the present invention;
FIG. 6 shows a structure of a user information cutover apparatus in an embodiment of the present invention;
FIG. 7 shows a cutover scheme in an application embodiment of the present invention;
FIG. 8 is a flowchart of an application embodiment of the present invention;
FIG. 9 shows a cutover scheme in another application embodiment of the present invention;
FIG. 10 is a flowchart of another application embodiment of the present invention; and
FIG. 11 is a flowchart of another application embodiment of the present invention.

### DETAILED DESCRIPTION

First, the architecture of a user information cutover system is described below. As shown in FIG. 1A, the system architecture includes: a Customer Relationship Management (CRM) system, an IN, an OCS, and a Core Network (CN). The IN includes a Service Management Point (SMP) and a Service Control Point (SCP). The OCS includes a Bill Management Point (BMP), an SCP, and a Convergent Billing Platform (CBP). The CN includes: a Home Location Register (HLR), and a Gateway General Packet Radio Service (GPRS) Supporting Node (GGSN)/Content Charging Gateway (CCG).

As shown in FIG. 1, the first user information cutover method under the present invention includes the following steps:
S101: Information about a user is obtained from an IN.
S 102: The user information is submitted to an OCS.
S103: The CN is requested to modify the user's Customized Application for Mobile Network Enhanced Logic (CAMEL) subscription information into the CAMEL subscription information corresponding to the OCS, and modify the user's attribution information into the attribution information corresponding to the OCS.

The performer of S101, S102, and S103 may be a CRM system. When the user information is obtained from the IN, the user information may be obtained from an SMP of the IN. When the user information is submitted to the OCS, the user information may be submitted to a BMP of the OCS. When the CN is requested to modify the user's CAMEL subscription information, the HLR of the CN may be requested to modify the user's CAMEL subscription information. When the CN is requested to modify the user's attribution information, the GGSN/CCG may be requested to modify the user's attribution information.

Before the user information is obtained from the IN, the user information may be requested from the IN. Specifically, the user information may be requested from the SMP of the IN.

After the user information is requested from the IN but before the user information is actually obtained from the IN, the IN may judge whether the user is using the service. If the user is using the service, the IN (specifically, may be the SMP of the IN) returns a request failure message; if the user is not using the service, the IN (specifically, may be the SMP of the IN) sets the user to a state of being temporarily unable to access the service, and returns the user information.

When the user information is submitted to the OCS, the user information may be submitted to the BMP of the OCS through a Web service interface.

After the user information is submitted to the OCS, the OCS (specifically, may be the BMP of the OCS) may convert the user information into the OCS format.

When the CN is requested to modify the user's CAMEL subscription information, the HLR may be requested to modify the SCP address in the user's CAMEL subscription information into the SCP address of the user's home OCS.

When the CN is requested to modify the user's attribution information, if the data service charging triggering component of the user is the user's home CBP, the GGSN/CCG may be requested to add description about the user's home CBP into a number routing table of the data service charging triggering component of the user; if the data service charging triggering component of the user is the SCP of the home OCS of the user, the SCP number in the number routing table of the data service charging triggering component of the user may be set to be the SCP ID of the home OCS of the user.

If requesting the CN to modify the user's CAMEL subscription information fails, or if requesting the CN to modify the user's attribution information fails, the OCS (specifically, may be the BMP of the OCS) may be requested to delete the user information.

After the CN is requested to modify the user's CAMEL subscription information and the CN is requested to modify the user's attribution information, the IN (specifically, may be the SMP of the IN) may further be requested to delete the user information.

It should be noted that, requesting the CN to modify the user's CAMEL subscription information may occur before, at the same time as or after requesting the CN to modify the user's attribution information.

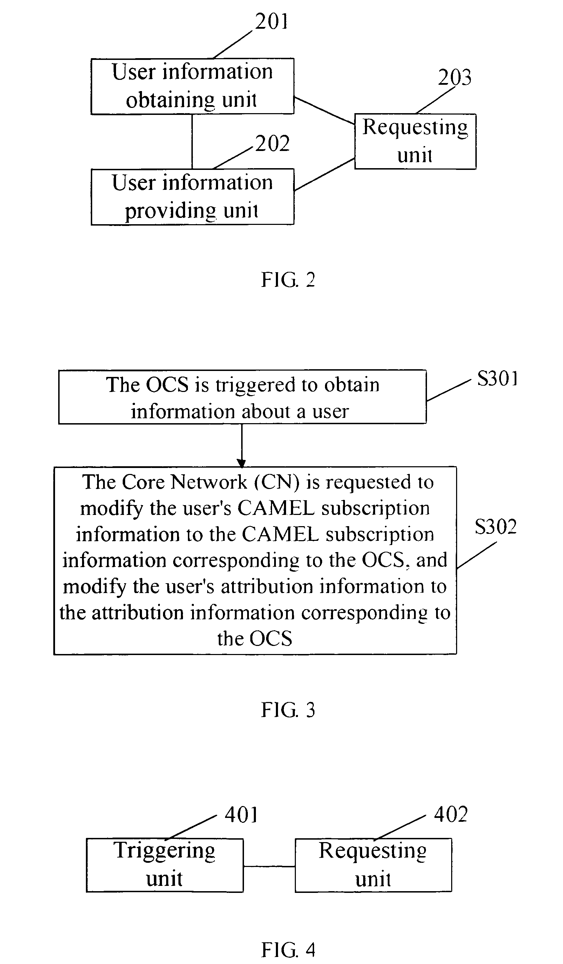

The method in FIG. 1 may be implemented by various apparatuses. As shown in FIG. 2, one of the user information cutover apparatuses includes:
a user information obtaining unit 201, configured to obtain information about a user from an IN;
a user information providing unit 202, configured to submit the user information obtained by the user information obtaining unit 201 to an OCS; and
a requesting unit 203, configured to: after the user information providing unit 202 submits the user information obtained by the user information obtaining unit 201 to the OCS, request a CN to modify the user's CAMEL subscription information into the CAMEL subscription information corresponding to the OCS, and request the CN to modify the user's attribution information into the attribution information corresponding to the OCS.

The user information providing unit 202 may submit the user information to the OCS through a Web service interface.

When requesting the CN to modify the user's CAMEL subscription information, the requesting unit 203 may request the HLR to modify the SCP address in the user's CAMEL subscription information into the SCP address of the user's home OCS.

When the requesting unit 203 requests the CN to modify the user's attribution information, if the data service charging triggering component of the user is the user's home CBP, the requesting unit 203 may request the GGSN/CCG to add description about the user's home CBP into a number routing table of the data service charging triggering component of the user; if the data service charging triggering component of the user is the SCP of the home OCS of the user, the requesting unit 203 may set the SCP number in the number routing table of the data service charging triggering component of the user to be the SCP ID of the home OCS of the user.

Before the user information obtaining unit 201 obtains the information about a user from the IN, the requesting unit 203 may request the user information from the IN.

If requesting the CN to modify the user's CAMEL subscription information fails, or if requesting the CN to modify the user's attribution information fails, the requesting unit 203 may request the OCS to delete the user information.

After requesting the CN to modify the user's CAMEL subscription information and requesting the CN to modify the user's attribution information, the requesting unit 203 may request the IN to delete the user information.

It should be noted that, the units in the foregoing apparatus may be applied or set in a CRM system. The working mode of such units in the CRM system is the same as the working mode in the foregoing apparatus.

FIG. 3 is a flowchart of another user information cutover method in an embodiment of the present invention. As shown in FIG. 3, the method includes the following steps:
S301: An OCS is triggered to obtain information about a user.
S302: A CN is requested to modify the user's CAMEL subscription information into the CAMEL subscription information corresponding to the OCS, and modify the user's attribution information into the attribution information corresponding to the OCS.

The performer of S301 and S302 may be a CRM system. To trigger an OCS to obtain the information about a user, the BMP of the OCS may be triggered to obtain the user information. To request the CN to modify the user's CAMEL subscription information, the HLR of the CN may be requested to modify the user's CAMEL subscription information. To request the CN to modify the user's attribution information, the GGSN/CCG may be requested to modify the user's attribution information.

To trigger the OCS to obtain information about a user, a Web service request may be sent to the OCS (specifically, may be sent to the BMP of the OCS).

After the OCS is triggered to obtain the information about a user, the OCS requests the information about the user from the IN. Specifically, the BMP of the OCS requests the user information from the SMP of the IN.

After the OCS requests the user information from the IN, the IN may judge whether the user is using the service. If the user is using the service, the IN (specifically, may be the SMP of the IN) returns a request failure message; otherwise, the IN (specifically, may be the SMP of the IN) sets the user to a state of being temporarily unable to access the service, and returns the user information.

After the IN returns the user information, the OCS may convert the user information into the OCS format. Specifically, the BMP of the OCS may convert the user information into the OCS format.

When the CN is requested to modify the user's CAMEL subscription information, the HLR may be requested to modify the SCP address in the user's CAMEL subscription information into the SCP address of the user's home OCS.

When the CN is requested to modify the user's attribution information, if the data service charging triggering component of the user is the user's home CBP, the GGSN/CCG may be requested to add description about the user's home CBP into a number routing table of the data service charging triggering component of the user; if the data service charging triggering component of the user is the SCP of the home OCS of the user, the SCP number in the number routing table of the data service charging triggering component of the user may be set to be the SCP ID of the home OCS of the user.

If requesting the CN to modify the user's CAMEL subscription information fails, or if requesting the CN to modify the user's attribution information fails, the OCS (specifically, may be the BMP of the OCS) may be requested to delete the user information.

After the CN is requested to modify the user's CAMEL subscription information and the CN is requested to modify the user's attribution information, the IN (specifically, may be the SMP of the IN) may further be requested to delete the user information.

It should be noted that, requesting the CN to modify the user's CAMEL subscription information may occur before, at the same time as or after requesting the CN to modify the user's attribution information.

The method in FIG. 3 may be implemented by various apparatuses. As shown in FIG. 4, one of the user information cutover apparatuses includes:
a triggering unit 401, configured to trigger the OCS to obtain information about a user; and
a requesting unit 402, configured to: after the triggering unit 401 triggers the OCS to obtain the information about a user, request a CN to modify the user's CAMEL subscription information into the CAMEL subscription information corresponding to the OCS, and request the CN to modify the user's attribution information into the attribution information corresponding to the OCS.

When triggering the OCS to obtain information about a user, the triggering unit 401 may send a Web request to the OCS.

When requesting the CN to modify the user's CAMEL subscription information, the requesting unit 402 may request the HLR to modify the SCP address in the user's CAMEL subscription information into the SCP address of the user's home OCS.

When the requesting unit 402 requests the CN to modify the user's attribution information, if the data service charging triggering component of the user is the user's home CBP, the requesting unit 402 may request the GGSN/CCG to add description about the user's home CBP into a number routing table of the data service charging triggering component of the user; if the data service charging triggering component of the user is the SCP of the home OCS of the user, the requesting unit 402 may set the SCP number in the number routing table of the data service charging triggering component of the user to be the SCP ID of the home OCS of the user.

If requesting the CN to modify the user's CAMEL subscription information fails, or if requesting the CN to modify the user's attribution information fails, the requesting unit 402 may request the OCS to delete the user information.

After requesting the CN to modify the user's CAMEL subscription information or and requesting the CN to modify the user's attribution information, the requesting unit 402 may request the IN to delete the user information.

It should be noted that, the units in the apparatus shown in FIG. 4 may be applied or set in a CRM system. The working mode of such units in the CRM system is the same as the working mode in the apparatus shown in FIG. 4.

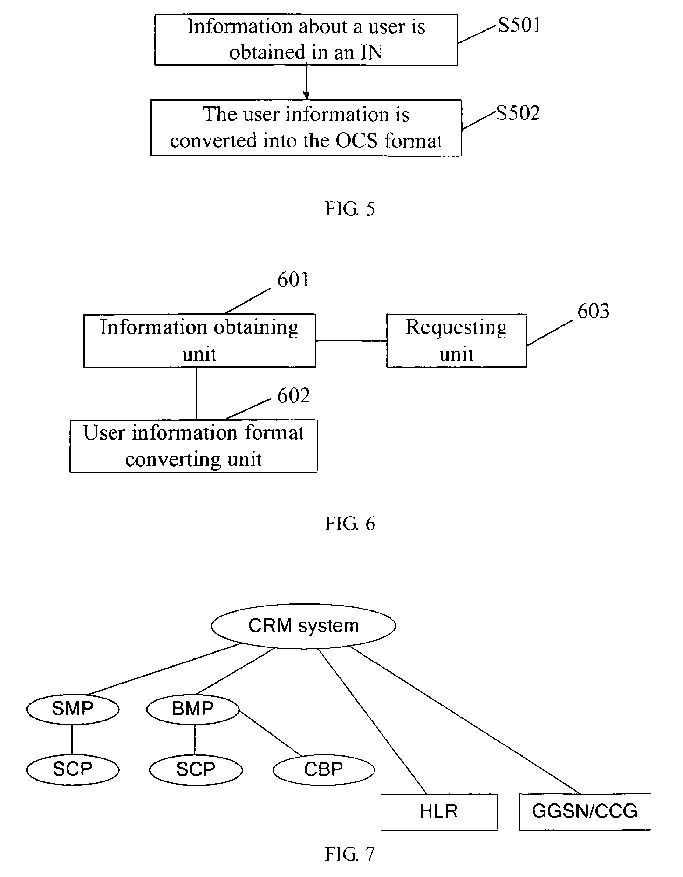

FIG. 5 is a flowchart of another user information cutover method in an embodiment of the present invention. As shown in FIG. 5, the method includes the following steps:
S501: Information about a user is obtained in an IN.
S502: The user information is converted into an OCS format.

The performer of S501 and S502 may be an OCS. Specifically, the performer of S501 and S502 may be the BMP of an OCS.

When the information about a user is obtained from the IN, the user information provided by the CRM system may be obtained.

When the information about a user is obtained from the IN, the user information may also be obtained from the IN directly. Specifically, the user information may be obtained from the SMP of the IN. Before the information about a user from the IN is obtained, the BMP may obtain a trigger request, sent by the CRM system, of obtaining the user information. After the trigger request, sent by the CRM system, of obtaining the user information is obtained, but before the information about a user from the IN is obtained, the IN (specifically, may be the SMP of the IN) may be requested for the information about the user.

After the user information is requested from the IN the IN may judge whether the user is using the service. If the user is using the service, the IN (specifically, may be the SMP of the IN) returns a request failure message; if the user is not using the service, the IN (specifically, may be the SMP of the IN) sets the user to a state of being temporarily unable to access the service, and returns the user information.

After the information about a user from the IN is obtained, the IN may be requested to delete the user information. Specifically, the SMP of the IN may be requested to delete the user information. After the information about a user from the IN is obtained, the CRM system may be requested to delete the information about the user in the lN.

When the user information is converted into the OCS format, an ID of a new user in the OCS may be created out of an MS1SDN in the user information, the balance in the user information may be assigned to the account balance of the new user, the bonus information in the user information may be mapped to the free resource account of the new user, the lifecycle state attribute in the user information may be mapped to the lifecycle attribute field of the new user, the familiarity number list in the user information may be mapped to the familiarity number list of the new user, a product subscription relation may be generated for the new user according to the product ID corresponding to all service types of the MS1SDN. and other special information may be mapped according to specific logics.

After the information about a user from the IN is obtained, the user information may be deleted if a request of deleting the user information is received. It should be noted that, requesting the CN to modify the user's CAMEL subscription information may occur before, at the same time as or after requesting the CN to modify the user's attribution information.

The method in FIG. 5 may be implemented by various apparatuses. As shown in FIG. 6, one of the user information cutover apparatuses includes:
an information obtaining unit 601. configured to obtain information about a user from an IN; and
a user information format converting unit 602. configured to convert the user information obtained by the information obtaining unit 601 into an OCS format.

When obtaining the information about a user from the IN, the information obtaining unit 601 may obtain the user information provided by the CRM system.

When obtaining the information about a user from the IN. the information obtaining unit 601 may also obtain the user information from the IN directly. Before obtaining the information about a user from the IN, the information obtaining unit 601 may obtain a trigger request, sent by the CRM system, of obtaining the user information.

The foregoing apparatus may further include a requesting unit 603. The requesting unit 603 is configured to request the information about the user from the IN after the information obtaining unit 601 obtains the trigger request, sent by the CRM system, of obtaining the user information but before the information obtaining unit 601 obtains the information about the user in the IN.

The requesting unit 603 is further configured to: after the information obtaining unit 601 obtains the information about a user from the IN, request the IN to delete the user information, or request the CRM system to delete the information about the user in the IN.

The user information format converting unit 602 may include:
a new user ID creating unit, configured to create an ID of a new user in the OCS out of an MSISDN in the user information obtained by the information obtaining unit 601;
a balance assigning unit, configured to assign the balance in the user information obtained by the information obtaining unit 601 to the account balance of the new user;
a bonus information mapping unit, configured to map the bonus information in the user information obtained by the information obtaining unit 601 to the free resource account of the new user;
a lifecycle state attribute mapping unit, configured to map the lifecycle state attribute in the user information obtained by the information obtaining unit 601 to the lifecycle attribute field of the new user;
a familiarity number list mapping unit, configured to map the familiarity number list in the user information obtained by the information obtaining unit 601 to the familiarity number list of the new user;
a subscription relation generating unit, configured to generate a product subscription relation for the new user according to the product ID corresponding to all service types of the MSISDN obtained by the information obtaining unit 601; and
a special information mapping unit, configured to map, according to specific logics, other special information in the user information obtained by the information obtaining unit 601.

It should be noted that, the units in the apparatus shown in FIG. 6 may be applied or set in an OCS, and more specifically, in the BMP of an OCS. The working mode of such units in the CRM system or the BMP of the OCS is the same as the working mode in the apparatus shown in FIG. 6.

In order to help those skilled in the art understand the present invention more clearly, three application embodiments of the user information cutover method are given below.

One application embodiment is based on the cutover scheme shown in FIG. 7.

An IN includes an SMP and an SCP. The SMP provides a Man-Machine Language (MML) interface to the outside of the IN.

An OCS includes a BMP, an SCP, and a CBP (or an online charging interface of the OCS). The BMP provides a Web service interface to the outside of the OCS. The SCP is a call control node that supports the CBP/OCS charging.

The HLR is configured to store subscription information. The GGSN/CCG is a trigger point of data service charging. The CRM system provides operation management function of the IN and the OCS.

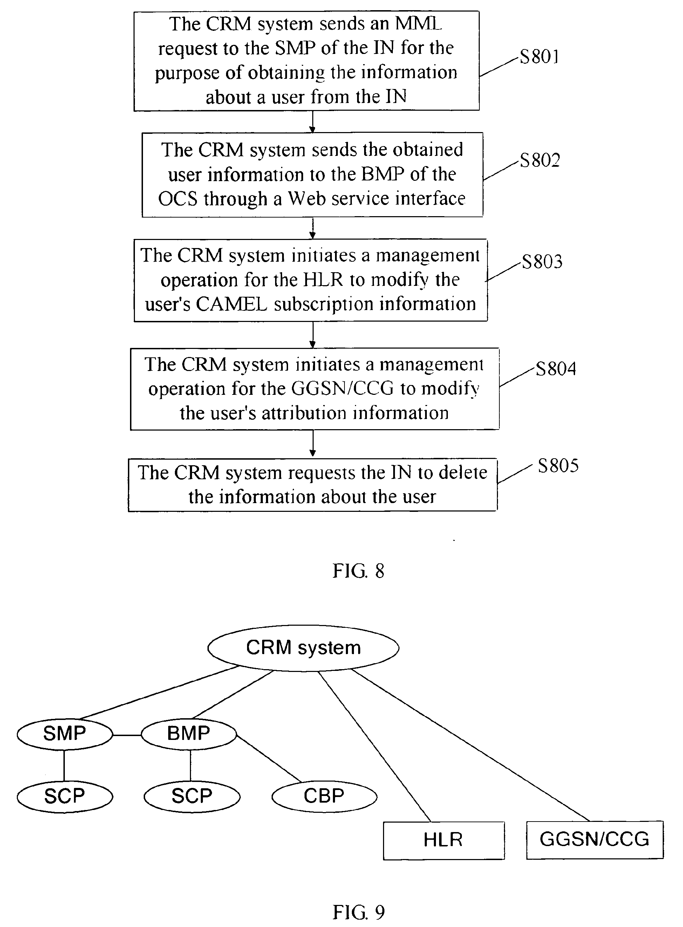

As shown in FIG. 8, the process of this application embodiment includes the following steps:
S801: The CRM system sends an MML request to the SMP of the IN for the purpose of obtaining the information about a user from the IN. The user information may include user attributes, activated services, free amount, account balance, service information, and service control parameters. If the user is using the service, the SMP returns a request failure message to the CRM system. If the user is not using the service, the SMP sets the user in the IN to a state of being temporarily unable to access the service, and returns the user information to the CRM system. Besides, the CRM system may send an MML request to the SMP of the IN when the user requests to cut over the user information.
S802: The CRM system sends the obtained user information to the BMP of the OCS through a Web service interface.

After obtaining the user information, the BMP maps and converts the user information. For example, the BMP may perform one of the following operations:
(1) creating an ID for a new user in the OCS out of the MSISDN in the user information;
(2) assigning the account balance in the user information to the account balance of the new user;
(3) mapping the bonus information in the user information to the free resource account of the new user;
(4) mapping the lifecycle state attribute in the user information to the lifecycle attribute field of the new user;
(5) mapping the familiarity number list in the user information to the familiarity number list of the new user;
(6) generating a product subscription relation for the new user according to the product ID corresponding to all service types of the MSISDN; and
(7) mapping other special information according to specific logics, if any other special information exists.

If the sending of the obtained user information to the BMP of the OCS fails, the CRM system gives up the cutover task.

S803: The CRM system initiates a management operation to the HLR, for modifying the user's CAMEL subscription information. Specifically, the SCP address in the subscription information is modified into the SCP address corresponding to the OCS.

If this step fails, the CRM system requests the BMP to delete the new user information.

S804: The CRM system initiates a management operation to the GGSN/CCG, for modifying the user's attribution information. Specifically, the number routing table of the data service charging triggering component is modified. Table 1 is an exemplary number routing table.

**Table 1**

| **Field Name** | **Field Type** | **Value Range** | **Description** |
|---|---|---|---|
| #MSISDN | Character type (20 bits) | | Mobile Station International ISDN number (MSISDN) |
| SCPNo. | Integer type (Int) | >0 | SCPID to which the MSISDN belongs |
| CBPNo. | Integer type (Int) | ≥0 | CBPID to which the MSISDN belongs. When the value of this field is 0, it indicates that the user is an IN user and has no home CBP. |

The MSISDN is the current number, the "SCPNo." is the SCPID to which the MSISDN belongs, and the "CBPNo." is the CBPID to which the MSISDN belongs.

The GGSN/CCG may forward each data service charging request of the MSISDN to the corresponding CBP according to the number routing table.

If S804 fails, the CRM system performs the following rollback operations:
request the HLR to modify the SCP address of the OCS corresponding to the new user into the SCP address of the IN, and specifically, the CRM system may send such a request to the HLR; and
request the BMP to delete the new user information, and specifically, the CRM system may send such a request to the BMP.
S805: The CRM system requests the IN to delete the user information, and specifically, the CRM system may send such a request to the SMP.

If this step fails, the CRM system may not perform a rollback operation.

It should be noted that, S803 may occur before, at the same time as, or after S804.

In this application embodiment, the CRM system obtains the user information from the IN directly, and then submits the user information to the OCS. In fact, the OCS may obtain user information from the IN as triggered by the CRM system, as detailed in the following application embodiment.

Another application embodiment is based on the cutover scheme shown in FIG. 9.

Like FIG. 7, the IN includes an SMP and an SCP. The SMP provides an MML interface to the outside of the IN. An OCS includes a BMP, an SCP, and a CBP (or an online charging interface of the OCS). The BMP provides a Web service interface to the outside of the OCS. The SCP is a call control node that supports the CBP/OCS charging. The HLR is configured to store the subscription information. The GGSN/CCG is a trigger point of data service charging. The CRM system provides operation management function of the IN and the OCS. Unlike FIG. 7, the BMP of the OCS can exchange information with the SMP of the IN directly.

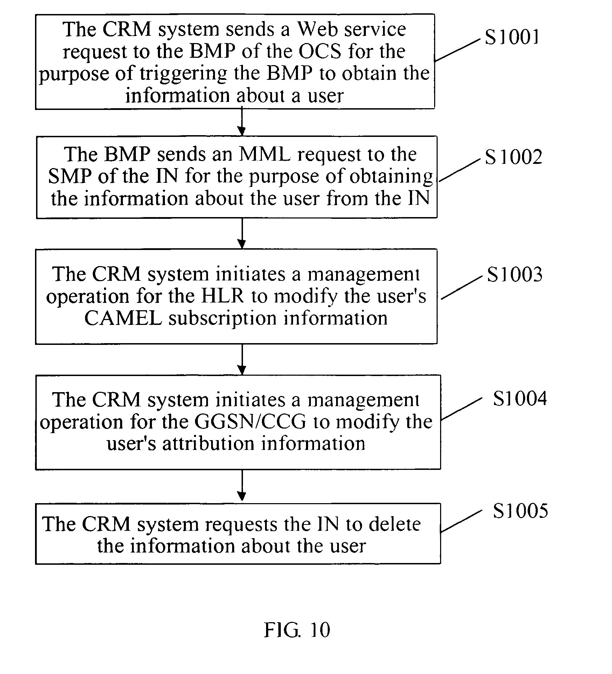

As shown in FIG. 10, the process of this application embodiment includes the following steps:
S1001: The CRM system sends a Web service request to the BMP of the OCS for the purpose of triggering the BMP to obtain information about a user.
S1002: The BMP sends an MML request to the SMP of the IN for the purpose of obtaining the information about the user in the IN. The user information may include user attributes, activated services, free amount, account balance, service information, and service control parameters. If the user is using the service, the SMP returns a request failure message to the CRM system. If the user is not using the service, the SMP sets the user in the IN to a state of being temporarily unable to access the service, and returns the user information to the CRM system.

After obtaining the user information, the BMP maps and converts the user information. For example, the BMP may perform one of the following operations:
(1) creating an ID for a new user in the OCS out of an MSISDN;
(2) assigning the account balance in the user information to the account balance of the new user;
(3) mapping the bonus information in the user information to the free resource account of the new user;
(4) mapping the lifecycle state attribute in the user information to the lifecycle attribute field of the new user;
(5) mapping the familiarity number list in the user information to the familiarity number list of the new user;
(6) generating a product subscription relation for the new user according to the product ID corresponding to all service types of the MSISDN; and
(7) mapping the special information according to specific logics, if any other special information exists.

If the BMP fails in obtaining the information about the user in the IN, the BMP returns a failure message to the CRM system, and the CRM system gives up the cutover task.

S1003: The CRM system initiates a management operation to the HLR, for modifying the user's CAMEL subscription information. Specifically, the SCP address in the subscription information is modified into the SCP address corresponding to the OCS.

If this step fails, the CRM system requests the BMP to delete the new user information.

S1004: The CRM system initiates a management operation to the GGSN/CCG, for modifying the user's attribution information. Specifically, the number routing table of the data service charging triggering component is modified. Table 1 is an exemplary number routing table, where the MSISDN is the current number, the "SCPNo." is the SCPID to which the MSISDN belongs, and the "CBPNo." is the CBPID to which the MSISDN belongs.

The GGSN/CCG may forward each data service charging request of the MSISDN to the corresponding CBP according to the number routing table.

If S1004 fails, the CRM system performs the following rollback operations:
request the HLR to modify the SCP address of the OCS corresponding into the new user to the SCP address of the IN, and specifically, the CRM system may send such a request to the HLR: and
request the BMP to delete the new user information, and specifically, the CRM system may send such a request to the BMP.
S1005: The CRM system requests the IN to delete the user information, and specifically, the CRM system may send such a request to the SMP.

If this step fails, the CRM system may not perform a rollback operation:

It should be noted that, S1003 may occur before, at the same time as, or after S1004.

In this application embodiment, after initiating a management operation to the HLR and the GGSN/CCG respectively, the CRM system requests the IN to delete the user information. In fact, after obtaining the user information, the BMP may request the IN to delete the user information, as detailed in the following application embodiment.

Another application embodiment is based on the cutover scheme shown in FIG. 9.

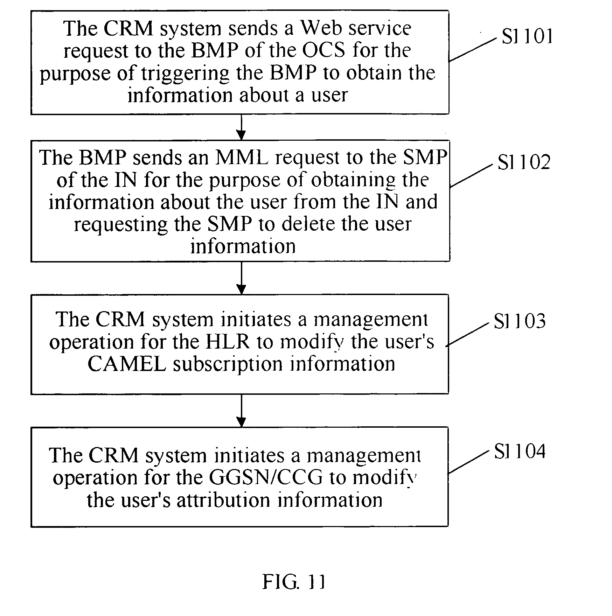

As shown in FIG. 11, the process of this application embodiment includes the following steps:
S1101: The CRM system sends a Web service request to the BMP of the OCS for the purpose of triggering the BMP to obtain information about a user.
S1102: The BMP sends an MM L request to the SMP of the IN for the purpose of obtaining the information about the user in the IN. The user information may include user attributes, activated services, free amount, account balance, service information, and service control parameters. If the user is using the service, the SMP returns a request failure message to the CRM system. If the user is not using the service, the SMP sets the user in the IN to a state of being temporarily unable to access the service, and returns the user information to the CRM system.

After obtaining the user information, the BMP maps and converts the user information. For example, the BMP may perform one of the following operations:
(1) creating an ID for a new user in the OCS out of the MSISDN:
(2) assigning the account balance in the user information to the account balance of the new user;
(3) mapping the bonus information in the user information to the free resource account of the new user;
(4) mapping the lifecycle state attribute in the user information to the lifecycle attribute field of the new user;
(5) mapping the familiarity number list in the user information to the familiarity number list of the new user;
(6) generating a product subscription relation for the new user according to the product ID corresponding to all service types of the MSISDN; and
(7) mapping the special information according to specific logics, if any other special information exists.

If the BMP maps and converts the user information successfully, the BMP requests the SMP to delete the user information, and specifically, sends such a request to the SMP. If the BMP fails in mapping or converting the user information, the BMP may notify the CRM system to return a failure message, and delete the user information.

If the BMP fails in obtaining the information about the user in the IN, the BMP returns a failure message to the CRM system, and the CRM system gives up the cutover task.

S1103: The CRM system initiates a management operation to the HLR, for modifying the user's CAMEL subscription information. Specifically, the SCP address in the subscription information is modified into the SCP address corresponding to the OCS.

If this step fails, the CRM system requests the BMP to delete the new user information.

S1104: The CRM system initiates a management operation to the GGSN/CCG, for modifying the user's attribution information. Specifically, the number routing table of the data service charging triggering component is modified. Table 1 is an exemplary number routing table, where the MSISDN is the current number, the "SCPNo." is the SCPID to which the MSISDN belongs, and the "CBPNo." is the CBPID to which the MSISDN belongs.

The GGSN/CCG may forward each data service charging request of the MSISDN to the corresponding CBP according to the number routing table.

If S1104 fails, the CRM system performs the following rollback operations:
request the HLR to modify the SCP address of the OCS corresponding to the new user into the SCP address of the IN, and specifically, the CRM system may send such a request to the HLR; and
request the BMP to delete the new user information, and specifically, the CRM system may send such a request to the BMP.
S1103 may occur before, at the same time as or after S1104.

In conclusion, in the embodiments of the present invention, because the load of cutting over user information of one user is smaller than the load of cutting over user information in batches, the time of suspending the user service is shorter, and the service consumption decrease caused by the suspension is avoided. Because no other user information needs to be cut over at the same time, the cutover risk is lowered, and the following circumstance never occurs: The cutover of information about other users is interrupted by failure of cutting over information about one or more users in batch cutover.

It is understandable to those skilled in the art that all or part of the steps of the foregoing embodiments may be implemented by hardware instructed by a computer program. The program may be stored in a computer-readable storage medium. When being executed, the program performs the processes covered in the foregoing embodiments. The storage medium may be a magnetic disk, Compact Disk (CD), Read-Only Memory (ROM), or Random Access Memory (RAM).

Although the invention is described through some exemplary embodiments, the invention is not limited to such embodiments. It is apparent that those skilled in the art can make modifications and variations to the invention without departing from the scope of the invention. The invention is intended to cover the modifications and variations provided that they fall in the scope of protection defined by the following claims or their equivalents.

## Claims

1. A user information cutover method, **characterized by** comprising:
obtaining (S101), by a Customer Relationship Management system, CRM, information about a user from an Intelligent Network, IN, submitting (S102) the user information to an Online Charging System, OCS, or triggering (S301), by the CRM, the OCS to obtain the user information from the IN; and
requesting (S103, S302), by the CRM, a Core Network, CN, to modify the user's Customized Application for Mobile Network Enhanced Logic, CAMEL, subscription information into the CAMEL subscription information corresponding to the OCS, and requesting the CN to modify the user's attribution information into the attribution information corresponding to the OCS.

2. The user information cutover method according to claim 1, **characterized in that**, the requesting a CN to modify the user's CAMEL subscription information into the CAMEL subscription information corresponding to the OCS comprises:
requesting a Home Location Register, HLR, to modify a Service Control Point, SCP, address in the user's CAMEL subscription information into the SCP address of the user's home OCS.

3. The user information cutover method according to any one of claims 1 and 2, **characterized in that** the requesting the CN to modify the user's attribution information into the attribution information corresponding to the OCS comprises:
if the data service charging triggering component of the user is the user's home Convergent Billing Platform, CBP, requesting the GGSN/CCG to add description about the user's home CBP into a number routing table of the data service charging triggering component of the user;
if the data service charging triggering component of the user is the SCP of the home OCS of the user, setting the SCP number in the number routing table of the data service charging triggering component of the user to the SCP ID of the home OCS of the user.

4. The user information cutover method according to any one of claims 1 to 3, **characterized in that** the method further comprises:
in the case of failure of requesting the CN to modify the user's CAMEL subscription information, or in the case of failure of requesting the CN to modify the user's attribution information, requesting the OCS to delete the user information

5. The user information cutover method according to any one of claims 1 to 4, **characterized in that** ,before the obtaining information about a user in an IN the method further comprises:
sending a request to the IN for obtaining the user information;
judging, by the IN, whether the user is using the service; if the user is using the service, returning, by the IN, a request failure message corresponding to the request for obtaining the user information; if the user is not using the service, setting, by the IN, the user to a state of being unable to access the service temporarily, and returning the user information.

6. A user information cutover apparatus, the user information cutover is a Customer Relationship Management system, CRM system, **characterized by** comprising:
a user information obtaining unit (201), configured to obtain information about a user from an IN;
a user information providing unit (202), configured to submit the user information obtained by the user information obtaining unit to an OCS; and
a requesting unit (203), configured to request a CN to modify the user's CAMEL subscription information into the CAMEL subscription information corresponding to the OCS, and request the CN to modify the user's attribution information into the attribution information corresponding to the OCS after the user information providing unit submits the user information obtained by the user information obtaining unit to the OCS.

7. The user information cutover apparatus according to claim 6, **characterized in that** the requesting unit (203) is further configured to, request the IN to delete the user information after requesting the CN to modify the user's CAMEL subscription information fails, or requesting the CN to modify the user's attribution information fails.

8. The user information cutover apparatus according to claim 6 or 7, **characterized in that** requesting unit (203) is further configured to request the IN to delete the user information, after requesting a CN to modify the user's CAMEL subscription information and requesting the CN to modify the user's attribution information.

9. A user information cutover apparatus, the user information cutover is a Customer Relationship Management system, CRM system, **characterized by** comprising:
a triggering unit (401), configured to trigger the OCS to obtain information about a user; and
a requesting unit (402), configured to: after the triggering unit triggers the OCS to obtain the user information, request a CN to modify the user's CAMEL subscription information into the CAMEL subscription information corresponding to the OCS, and request the CN to modify the user's attribution information into the attribution information corresponding to the OCS.

## Patentansprüche

1. Nutzerinformations-Übergabeverfahren, **dadurch gekennzeichnet ist, dass** es Folgendes umfasst:
Einholen (S101) von Informationen über einen Nutzer aus einem intelligenten Netz IN, durch ein Kundenbeziehungs-Managementsystem CRM, Übergeben (S 102) der Nutzerinformationen an ein Onlinebezahlungssystem OCS, oder Auslösen (S301) durch das CRM, dass das OCS die Nutzerinformation von dem IN einholt; und
Anfordern (S 103, S302) durch das CRM, dass ein Kernnetz CN die Customized-Application-for-Mobile-Network-Enhanced-Logic-Abonnementinformationen, CAMEL-Abonnementinformationen, des Nutzers in die dem OCS entsprechenden CAMEL-Abonnementinformationen ändert, und Anfordern, dass das CN die Zuschreibungsinformationen des Nutzers in die dem OCS entsprechenden Zuschreibungsinformationen ändert.

2. Nutzerinformations-Übergabeverfahren nach Anspruch 1, **dadurch gekennzeichnet, dass** das Anfordern, dass ein CN die CAMEL-Abonnementinformationen des Nutzers in die dem OCS entsprechenden CAMEL-Abonnementinformationen ändert, Folgendes umfasst:
Anfordern, dass ein Heimatregister HLR eine Dienststeuerungspunkt-Adresse, SCP-Adresse, in den CAMEL-Abonnementinformationen des Nutzers in die SCP-Adresse des Heimat-OCS des Nutzers ändert.

3. Nutzerinformations-Übergabeverfahren nach einem der Ansprüche 1 und 2, **dadurch gekennzeichnet, dass** das Anfordern, dass das CN die Zuschreibungsinformationen des Nutzers in die dem OCS entsprechenden Zuschreibungsinformationen ändert, Folgendes umfasst:
falls die Datendienstbezahlungs-Auslösekomponente des Nutzers die konvergente Zahlungsplattform CBP der Heimat des Nutzers ist, Anfordern, dass der GGSN/CCG eine Beschreibung über die CBP der Heimat des Nutzers in eine Nummern-Routing-Tabelle der Datendienstbezahlungs-Auslösekomponente des Nutzers hinzufügt;
falls die Datendienstbezahlungs-Auslösekomponente des Nutzers der SCP des Heimat-OCS des Nutzers ist, Einstellen der SCP-Nummer in der Nummern-Routing-Tabelle der Datendienstbezahlungs-Auslösekomponente des Nutzers auf die SCP-ID des Heimat-OCS des Nutzers.

4. Nutzerinformations-Übergabeverfahren nach einem der Ansprüche 1 bis 3, **dadurch gekennzeichnet, dass** das Verfahren ferner Folgendes umfasst:
falls nicht angefordert wird, dass das CN CAMEL-Abonnementinformationen des Nutzers ändert, oder falls nicht angefordert wird, dass das CN die Zuweisungsinformationen des Nutzers ändert, Anfordern, dass das OCS die Nutzerinformationen löscht.

5. Nutzerinformations-Übergabeverfahren nach einem der Ansprüche 1 bis 4, **dadurch gekennzeichnet, dass** das Verfahren vor dem Einholen von Informationen über einen Nutzer in einem IN ferner Folgendes umfasst:
Senden einer Anforderung zum Einholen der Nutzerinformationen an das IN;
Beurteilen, ob der Nutzer den Dienst verwendet, durch das IN; falls der Nutzer den Dienst verwendet, Zurückgeben einer Nichtanforderungsmeldung, die der Anforderung zum Einholen der Nutzerinformationen entspricht, durch das IN; falls der Nutzer den Dienst nicht verwendet, Einstellen des Nutzers auf einen Zustand, in dem er vorübergehend nicht auf den Dienst zugreifen kann, durch das IN und Zurückgeben der Nutzerinformationen.

6. Nutzerinformations-Übergabevorrichtung, wobei die Nutzerinformationsübergabe ein Kundenbeziehungs-Managementsystem, CRM-System, ist, **dadurch gekennzeichnet, dass** die Vorrichtung Folgendes umfasst:
eine Nutzerinformations-Einholeinheit (201), die zum Einholen von Informationen über einen Nutzer von einem IN konfiguriert ist;
eine Nutzerinformations-Bereitstellungseinheit (202), die zum Übergeben der durch die Nutzerinformations-Einholeinheit eingeholten Nutzerinformationen an ein OCS konfiguriert ist; und
eine Anforderungseinheit (203), die zum Anfordern, dass ein CN die CAMEL-Abonnementinformationen des Nutzers in die dem OCS entsprechenden CAMEL-Abonnementinformationen ändert, und zum Anfordern, dass das CN die Zuweisungsinformationen des Nutzers in die dem OCS entsprechenden Zuweisungsinformationen ändert, nachdem die Nutzerinformations-Bereitstellungseinheit die durch die Nutzerinformations-Einholeinheit eingeholten Nutzerinformationen an das OCS übergeben hat, konfiguriert ist.

7. Nutzerinformations-Übergabevorrichtung nach Anspruch 6, **dadurch gekennzeichnet, dass** die Anforderungseinheit (203) ferner dafür konfiguriert ist, anzufordern, dass das IN die Nutzerinformationen löscht, nachdem die Anforderung, dass das CN die CAMEL-Abonnementinformationen des Nutzers ändert, fehlgeschlagen ist, oder die Anforderung, dass das CN die Zuschreibungsinformationen des Nutzers ändert, fehlgeschlagen ist.

8. Nutzerinformations-Übergabevorrichtung nach Anspruch 6 oder 7, **dadurch gekennzeichnet, dass** die Anforderungseinheit (203) ferner dafür konfiguriert ist, anzufordern, dass das IN die Nutzerinformationen löscht, nachdem angefordert worden ist, dass ein CN die CAMEL-Abonnementinformationen des Nutzers ändert, und nachdem angefordert worden ist, dass das CN die Zuschreibungsinformationen des Nutzers ändert.

9. Nutzerinformations-Übergabevorrichtung, wobei die Nutzerinformationsübergabe ein Kundenbeziehungs-Managementsystem, CRM-System ist, **dadurch gekennzeichnet, dass** die Nutzerinformations-Übergabevorrichtung Folgendes umfasst:
eine Auslöseeinheit (401), die dafür konfiguriert ist, auszulösen, dass das OCS Informationen über einen Nutzer einholt; und
eine Anforderungseinheit (402), die zu Folgendem konfiguriert ist: Anfordern, dass ein CN die CAMEL-Abonnementinformationen des Nutzers in die dem OCS entsprechenden CAMEL-Abonnementinformationen ändert, und Anfordern, dass das CN die Zuweisungsinformationen des Nutzers in die dem OCS entsprechenden Zuweisungsinformationen ändert, nachdem die Auslöseeinheit ausgelöst hat, dass das OCS Nutzerinformationen einholt.

## Revendications

1. Procédé de conversion d'informations d'utilisateur, **caractérisé en ce qu'**il comprend :
l'obtention (S101), par un système de Gestion de Relations Clients, CRM, d'informations relatives à un utilisateur depuis un Réseau Intelligent, IN, la soumission (S 102) des informations d'utilisateur à un Système de Facturation en Ligne, OCS, ou le déclenchement (S301), par le CRM, de l'OCS afin d'obtenir les informations d'utilisateur depuis l'IN ; et
la requête (S103, S302), par le CRM, auprès d'un Réseau Central, CN, d'une modification des informations d'abonnement CAMEL (application personnalisée pour logique rehaussée de réseau mobile) de l'utilisateur en informations d'abonnement CAMEL correspondant à l'OCS, et la requête auprès du CN d'une modification des informations d'attribution de l'utilisateur en informations d'attribution correspondant à l'OCS.

2. Procédé de conversion d'informations d'utilisateur selon la revendication 1, **caractérisé en ce que** la requête auprès d'un CN d'une modification des informations d'abonnement CAMEL de l'utilisateur en informations d'abonnement CAMEL correspondant à l'OCS comprend :
la requête auprès d'un Enregistreur de Position de Rattachement, HLR, d'une modification d'une adresse de Point de Commande de Service, SCP, dans les informations d'abonnement CAMEL de l'utilisateur en adresse SCP de l'OCS de rattachement de l'utilisateur.

3. Procédé de conversion d'informations d'utilisateur selon l'une quelconque des revendications 1 et 2, **caractérisé en ce que** la requête auprès du CN d'une modification des informations d'attribution de l'utilisateur en informations d'attribution correspondant à l'OCS comprend :
si le composant de déclenchement de facturation du service de données de l'utilisateur est la Plate-Forme de Facturation Convergente, CBP, de rattachement de l'utilisateur, la requête auprès du GGSN/CCG d'un ajout d'une description relative à la CBP de rattachement de l'utilisateur dans une table de routage de numéros du composant de déclenchement de facturation du service de données de l'utilisateur ;
si le composant de déclenchement de facturation du service de données de l'utilisateur est le SCP de l'OCS de rattachement de l'utilisateur, le réglage du numéro de SCP dans la table de routage de numéros du composant de déclenchement de facturation du service de données de l'utilisateur sur l'ID SCP de l'OCS de rattachement de l'utilisateur.

4. Procédé de conversion d'informations d'utilisateur selon l'une quelconque des revendications 1 à 3, **caractérisé en ce que** le procédé comprend en outre :
en cas d'échec de la requête auprès du CN d'une modification des informations d'abonnement CAMEL de l'utilisateur, ou en cas d'échec de la requête auprès du CN d'une modification des informations d'attribution de l'utilisateur, la requête auprès de l'OCS d'une suppression des informations d'utilisateur.

5. Procédé de conversion d'informations d'utilisateur selon l'une quelconque des revendications 1 à 4, **caractérisé en ce qu'**il comprend en outre, avant l'obtention des informations relatives à un utilisateur dans un IN :
l'envoi d'une requête à l'IN pour obtenir les informations d'utilisateur ;
le jugement, par l'IN, que l'utilisateur utilise ou non le service ; si l'utilisateur utilise le service, le renvoi, par l'IN, d'un message d'échec de requête correspondant à la requête d'obtention des informations d'utilisateur ; si l'utilisateur n'utilise pas le service, le réglage, par l'IN, de l'utilisateur sur un état d'impossibilité temporaire d'accès au service, et le renvoi des informations d'utilisateur.

6. Appareil de conversion d'informations d'utilisateur, la conversion des informations d'utilisateur est un système de Gestion de Relations Clients, ou système CRM, **caractérisé en ce qu'**il comprend :
une unité d'obtention d'informations d'utilisateur (201), configurée pour obtenir des informations relatives à un utilisateur depuis un IN ;
une unité de fourniture d'informations d'utilisateur (202), configurée pour soumettre les informations d'utilisateur obtenues par l'unité d'obtention d'informations d'utilisateur à un OCS ; et
une unité de requête (203), configurée pour requérir auprès d'un CN une modification des informations d'abonnement CAMEL de l'utilisateur en informations d'abonnement CAMEL correspondant à l'OCS, et requérir auprès du CN une modification des informations d'attribution de l'utilisateur en informations d'attribution correspondant à l'OCS après que l'unité de fourniture d'informations d'utilisateur soumet les informations d'utilisateur obtenues par l'unité d'obtention d'informations utilisateur à l'OCS.

7. Appareil de conversion d'informations d'utilisateur selon la revendication 6, **caractérisé en ce que** l'unité de requête (203) est configurée en outre pour requérir auprès de l'IN une suppression des informations d'utilisateur après un échec de la requête auprès du CN d'une modification des informations d'abonnement CAMEL de l'utilisateur, ou un échec de la requête auprès du CN d'une modification des informations d'attribution de l'utilisateur.

8. Appareil de conversion d'informations d'utilisateur selon la revendication 6 ou 7, **caractérisé en ce que** l'unité de requête (203) est configurée en outre pour requérir auprès de l'IN une suppression des informations d'utilisateur après une requête auprès du CN d'une modification des informations d'abonnement CAMEL de l'utilisateur et une requête auprès du CN d'une modification des informations d'attribution de l'utilisateur.

9. Appareil de conversion d'informations d'utilisateur, la conversion des informations d'utilisateur est un système de Gestion de Relations Clients, ou système CRM, **caractérisé en ce qu'**il comprend :
une unité de déclenchement (401), configurée pour déclencher l'OCS afin d'obtenir des informations relatives à un utilisateur ; et
une unité de requête (402), configurée pour : après que l'unité de déclenchement déclenche l'OCS pour obtenir les informations d'utilisateur, requérir auprès du CN une modification des informations d'abonnement CAMEL de l'utilisateur en informations d'abonnement CAMEL correspondant à l'OCS, et requérir auprès du CN une modification des informations d'attribution de l'utilisateur en informations d'attribution correspondant à l'OCS.
